# EUROPEAN PATENT SPECIFICATION

(11) **EP 2 168 469 B1**
(45) Date of publication and mention of the grant of the patent: **17.07.2013**
(21) Application number: 08405237.2
(22) Date of filing: 25.09.2008
(51) Int. Cl.: A47J 31/60, C02F 1/00

(54) **Filter cartridge for a beverage machine and beverage machine with a filter cartridge**
Filterkartusche für eine Getränkemaschine und Getränkemaschine mit einer Filterkartusche
Cartouche de filtre pour machine à boissons et machine à boissons dotée d'une cartouche de filtre

(43) Date of publication of application: 31.03.2010
(73) Proprietor: Nestec S.A., 1800 Vevey (CH)
(72) Inventor: Turchi, Daniel, 1094 Paudex (CH); Achtnich, Ulrich, 8953 Dietikon (CH); Brügger, Daniel, 6010 Kriens (CH)
(74) Representative: Gundel, Isabelle

(56) References cited:
- WO-A-2004/007374
- DE-A1- 3 840 276
- DE-A1-102004 049 876

## Description

### Technical field

The present invention relates to a filter cartridge for a beverage machine and a beverage machine with a filter cartridge. The beverage machine can be for example a coffee machine.

A water filter cartridge is put in a water tank of a beverage machine to treat the raw water in the water tank. Granular filter material is located inside of the water filter cartridge to soften water flowing through the filter cartridge. Furthermore therewith small particles can be filtered out. For sucking the water through the filter cartridge the beverage machine can comprise a suction pump.

### Background of the invention

In the prior art DE 10 2004 049 876 A1 a filter cartridge is described which comprises filtering means, an upflow chamber and a downflow chamber which communicate with one another in the upper region. Furthermore, the filter cartridge comprises an inlet opening and an inlet region arranged upstream of the inlet opening and an outlet opening which are both arranged in the bottom region. The outlet opening is connected to the inlet region via a bypass arranged in a lower portion of the upflow chamber and/or the downflow chamber or underneath the upflow and/or downflow chamber. This solution has the disadvantage that untreated water, which can be contaminated, flows through the bypass into the outlet. This means, that it cannot be guaranteed that only treated (for example dechlorinated) water is released from the outlet of the water tank. Another disadvantage is that it is difficult for the user to regulate the fracture opening of the bypass since the filter cartridge is mounted in the water tank.

### Summary of the invention

An object of the invention is to provide a filter cartridge for a beverage machine and a beverage machine with a filter cartridge, by which the water quality is constantly and durably improved.

Advantageously the hardness of the water is reduced and the pH-value stays unchanged. A further advantage is that the improvement of the water quality becomes predictable and that the water quality becomes nearly constant over a long time. Furthermore, it is made sure that only filtered and therewith clean water (for example dechlorinated) comes out of the water tank into the beverage machine.

According to one aspect of the invention, the object is achieved by a filter cartridge for a beverage machine with the features of the independent claim 1.

The filter cartridge for a beverage machine according to the invention comprises a housing with an inlet and an outlet and with filter material located in the housing. Furthermore, an upper outlet opening for filtered water and a lower outlet opening for filtered water are provided which are connected to the outlet.

Advantageous further developments of the invention arise from the characteristics indicated in the dependent patent claims.

In an embodiment of the filter cartridge the upper outlet opening and the lower outlet opening are connected via a channel to the outlet.

In another embodiment of the filter cartridge the upper outlet opening is located at an upper end of the channel, and the lower outlet opening is located in the channel between the upper outlet opening and the outlet.

Preferably, in the filter cartridge according to the invention the upper outlet opening is connected via a first channel to the outlet, and the lower outlet opening is connected via a second channel to the outlet.

Advantageously, in the filter cartridge according to the invention the upper outlet opening is equipped with a sieve. This makes sure that no filter material gets into the channel and from there to the outlet of the cartridge.

In a further improvement of the filter cartridge according to the invention the lower outlet opening is equipped with a further sieve. As aforementioned, this makes sure that no filter material gets into the channel and from there to the outlet of the cartridge.

Furthermore, in the filter cartridge according to the invention the upper outlet opening is arranged within the housing in the upper area.

Over and above this, the lower outlet opening can be arranged within the housing in the middle area.

Furthermore, in the filter cartridge according to the invention the housing can comprise a further inlet in the lower area.

The filter cartridge according to the invention can also comprise a connection nozzle with a sealing.

In a beverage machine with a water tank and the filter cartridge according to the invention the water tank can comprise a tank nozzle forming a water outlet. The tank nozzle is provided to be connected to the connection nozzle of the filter cartridge.

Finally, in the beverage machine according to the invention the tank nozzle can be arranged at the floor of the water tank.

### Brief description of the drawings

The invention and its embodiments will be more fully appreciated by reference to the following detailed description of presently preferred but nonetheless illustrative embodiments in accordance with the present invention when taken in conjunction with the accompanying drawings.

The figures are illustrating:
- Figure 1: a first embodiment of a filter cartridge in cross-section,
- Figure 2: the first embodiment of the filter cartridge mounted on a tank nozzle of a water tank in cross-section,
- Figure 3: a second embodiment of the filter cartridge in cross-section,
- Figure 4: a third embodiment of the filter cartridge in cross-section,
- Figure 5: the filter cartridge in a three dimensional view,
- Figure 6: the filter cartridge in a side view,
- Figure 7: the inlet and outlet area of the filter cartridge in a three dimensional view,
- Figure 8: the inlet and outlet area of the filter cartridge with a sealing in a three dimensional view,
- Figure 9: the inlet and outlet area of the filter cartridge with the sealing in cross-section, and
- Figure 10: the filter cartridge mounted in the water tank in a three dimensional view.

### Detailed description of the drawings

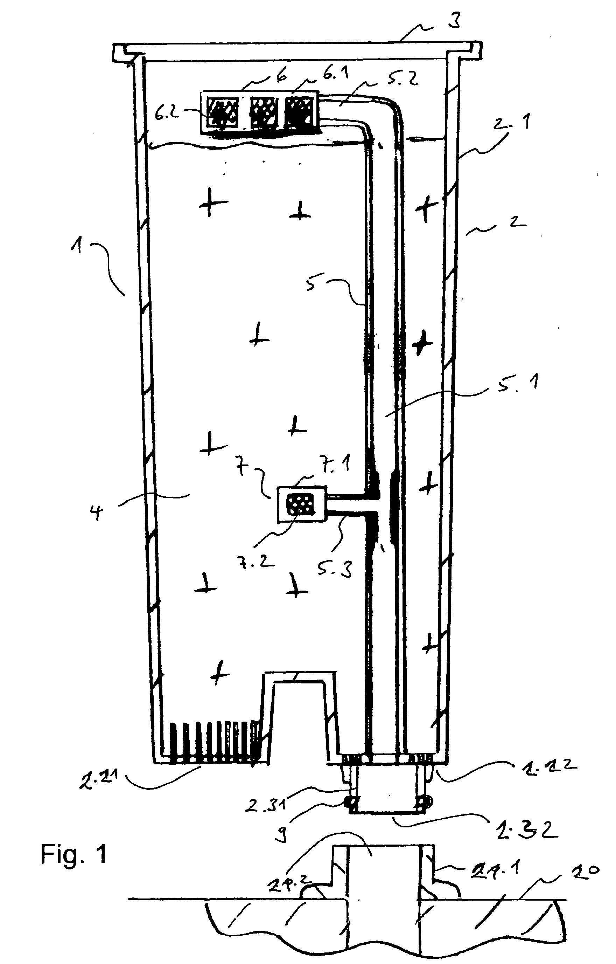

FIG. 1 shows a first embodiment of a filter cartridge 1 for water filtering in cross-section. The filter cartridge 1, or cartridge for short, comprises a housing 2 partially filled with a filtering material 4 which is hereinafter also called resin. The housing 2 has at its bottom area several slots which form a first water inlet 2.21 which is called hereinafter for short inlet. Furthermore, the housing 2 has at its bottom area a connection nozzle 2.31 which forms a water outlet 2.32, which is called hereinafter for short outlet. Over and above this, the housing 2 has several slots which surround the connection nozzle 2.31 and the outlet 2.32 concentrically and form a second water inlet 2.22.

Within the filter cartridge 1 a pipe 5 is arranged whose longitudinal axis is basically aligned vertically. The pipe 5, which is also called channel or downstream tube, has at its upper end a horizontal section 5.2 which is terminated with a so called upper outlet opening 6. This upper outlet opening 6 comprises a frame 6.1 carrying a sieve 6.2. The sieve 6.2 can be a membrane, a fabric, a wire mesh or the like. The frame 6.1 is provided to stabilize the sieve 6.2. The upper outlet opening 6 can be a separate element which can be e.g. stuck, welded or screwed on the upper end of the section 5.2 of the pipe 5. In the middle area of the vertical section 5.1 of the pipe 5, which is in this embodiment also the middle area of the filter cartridge 1, a further outlet opening 7 is provided, which is called hereinafter lower outlet opening 7. The lower outlet opening 7 can be formed in the same way as the upper outlet opening 6. This means, it has a frame 7.1 carrying a sieve 7.2, wherein the sieve 7.2 can be a membrane, a fabric, a wire mesh or the like. The lower outlet opening 7 can be a separate element and is fixed at the end of a horizontal section 5.3 of the pipe 5 and forms an opening in the pipe 5.

On the upper side of the filter cartridge 1 a cap 3 is provided which is fixed on the upper end of the sidewall 2.1 of the housing 2.

On the lateral surface of the connection nozzle 2.31 a radial sealing 9 is located. For connecting the filter cartridge 1 to a water tank 20 the connection nozzle 2.31 is plugged in a tank nozzle 21.1 of the water tank 20.

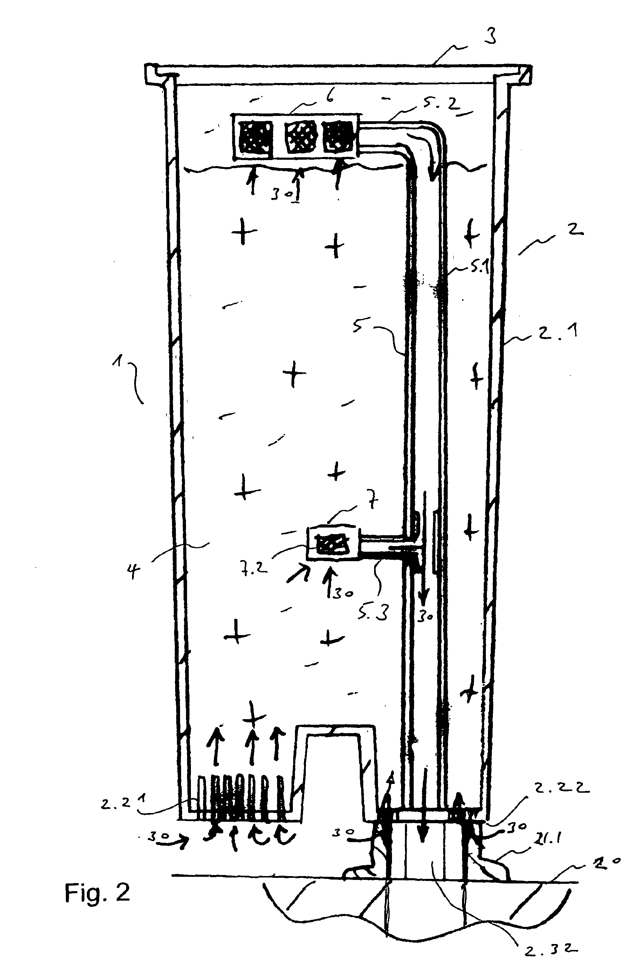

FIG. 2 shows how the first embodiment of the filter cartridge is mounted on the floor of the tank 20. Over and above this, in FIG. 2 the flow of the water is depicted. Naturally, the water tank 20 of the beverage machine is filled with raw water. To work up the raw water, it is sucked via the inlet openings 2.21 and 2.22 into the filter cartridge 1. The flow direction is depicted by the arrows 30. The raw water flows upwards through the filter material 4 and is filtered thereby. A first part of the filtered water flows through the outlet opening 7 into the pipe 5 and from there to the outlet 2.32. The remaining part of the water continues to flow upwards and then through the outlet opening 6 into the pipe 5 and from there to the outlet 2.32. By this means, the first part of the filtered water gets less filtered than the other (remaining) part of the water. And by this means, highly treated water, i.e. water coming from the upper outlet opening 6 is mixed with less or lightly treated water, i.e. water coming from the lower outlet opening 7.

In a preferred embodiment the lower outlet opening 7 is positioned at a high which is about 4/5 to 1/8 of the high of the filter cartridge 1.

In a preferred embodiment, the ratio of the water quantity coming for highly treated water and lightly treated water is between 1:1 to 4:1, preferably 3:1.

Advantageously, with the invention the pH value of the water can be leveled and the lifetime of the filter cartridge can be increased.

The outlet opening 7, which forms together with the horizontal section 5.3 a branch line, can be blocked after a certain period of use of the filter cartridge so that only water can flow through the upper outlet opening 6 into the downstream tube 5. Thus, the branch line serves to enhance the efficiency of the filter cartridge 1 at the beginning as long as the filter material is still fresh and unconsumed. This also helps to flatten the characteristics of the filter cartridge 1. Blocking of the lower outlet opening 7 can be obtained by different ways, such as by a filter membrane 7.2 that becomes clogged after a certain time.

The principle of the clogging is that the filter or sieve 7.2 at the outlet opening 7 has a limited opening surface that becomes more and more restricted and finally clogged completely by scale and other possible solid deposits in the course of time. The clogging of the sieve 7.2 results in that more water flows through the upper outlet opening 6. Therefore, the ratio between the water flowing through the outlet opening 7 and the water flowing through the outlet opening 6 varies during the lifetime of the filter cartridge 1. This in turn promotes an enhanced balance of the filter characteristics over the life time of the filter cartridge 1.

A coffee machine with an embodiment of the filter cartridge 1 according to the invention has been tested, wherein the surface of the sieve 7.2 of the filter cartridge 1 lies between 20 and 65 mm². In general, the appropriate size of the area of the sieve 7.2 dependents on the flow rate and the type of beverage machine in which the filter cartridge is provided to be used.

The size of the surface of the upper outlet opening 6.2 can be used to adapt the flow resistance of the entire filter cartridge 1. Normally, the surface of the upper outlet opening 6.2 is dimensioned large enough to achieve the smallest possible flow resistance.

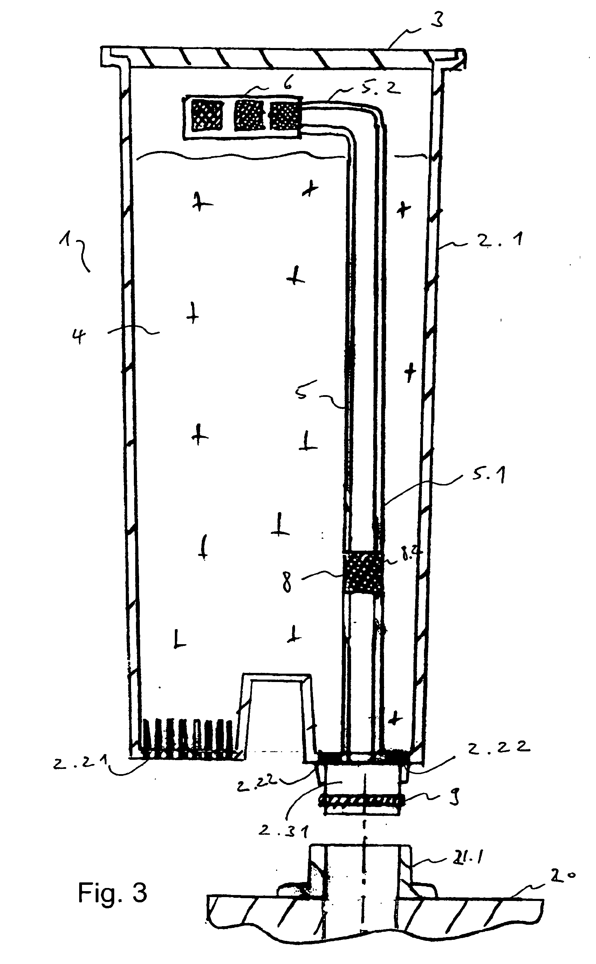

FIG. 3 shows a second embodiment of the filter cartridge 1 in cross-section. In difference to the first embodiment of the filter cartridge 1, the pipe 5 in the second embodiment has no second horizontal section 5.3. Instead an outlet opening 8 is provided in the vertical section 5.1 of the pipe 5. The outlet opening 8 is called hereinafter lower outlet opening 8 and can be for example a membrane, a wire mesh or the like.

The lower outlet opening 8 can be blocked after a certain period of use of the filter cartridge 1 so that only water can flow through the upper outlet opening 6 into the downstream tube 5. Thus, the lower outlet opening 8 serves to enhance the efficiency of the filter cartridge 1 at the beginning as long as the filter material is still fresh and unconsumed. This also helps to flatten the characteristics of the filter cartridge 1. Blocking of the lower outlet opening 8 can be obtained for example by a filter membrane 8.2 that becomes clogged after a certain time.

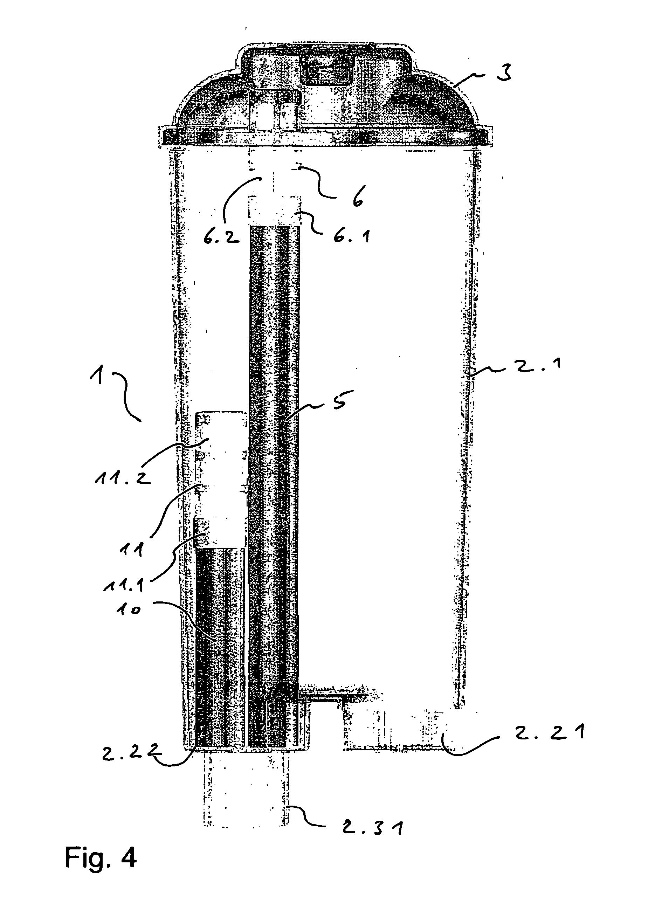

In FIG. 4 a third embodiment of the filter cartridge 1 is shown in cross-section. In difference to the first and second embodiment of the filter cartridge 1, two vertical adjusted pipes 5 and 10 are provided. Pipe 5 is a longer one and has on its upper end the outlet opening 6, while pipe 10 is shorter and has on its upper end an outlet opening 11. Both outlet openings 6 and 11 can be formed as aforementioned. This means, that the outlet openings 11 comprises a frame 11.1 carrying a sieve 11.2.

The outlet opening 11, which forms together with the shorter pipe 10 a branch line, can be blocked after a certain period of use of the filter cartridge 1 so that from then on only water can flow through the upper inlet opening 6 into the pipe 5. As already mentioned above, the branch line serves to enhance the efficiency of the filter cartridge 1 at the beginning as long as the filter material is still fresh and unconsumed. This also helps to flatten the characteristics of the filter cartridge 1. Blocking of the lower outlet opening 11 can be obtained for example by a filter membrane 11.2 that becomes clogged after a certain time.

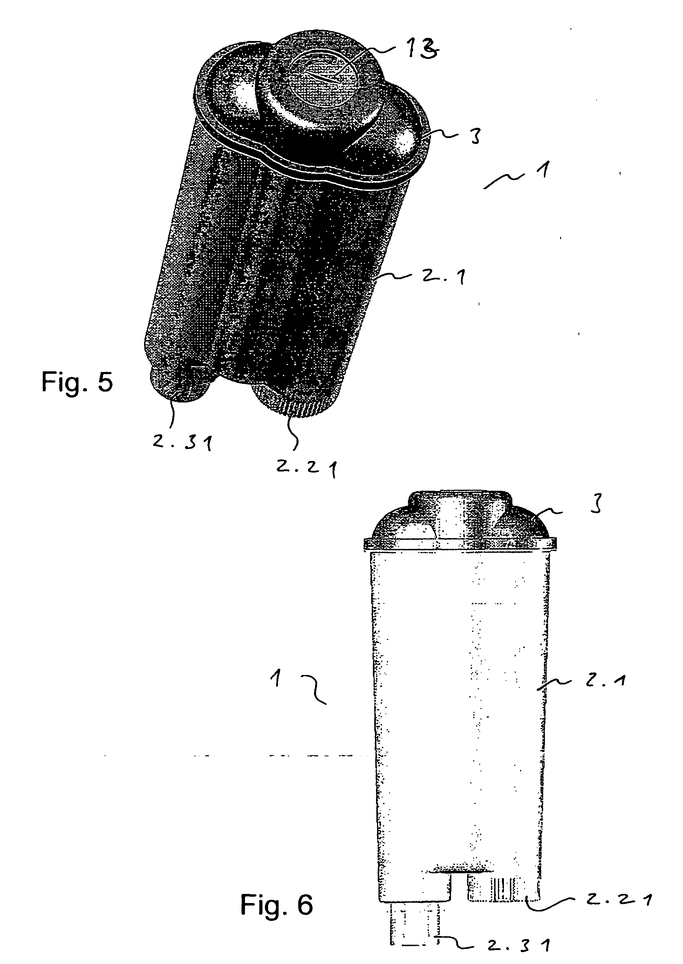

FIG. 5 shows the filter cartridge 1 in a three dimensional view. On the top of the cap 3 a pivotable disk 13 is arranged to indicate the user when the filter cartridge 1 should be replaced.

In FIG. 6 the filter cartridge 1 is depicted in a side view.

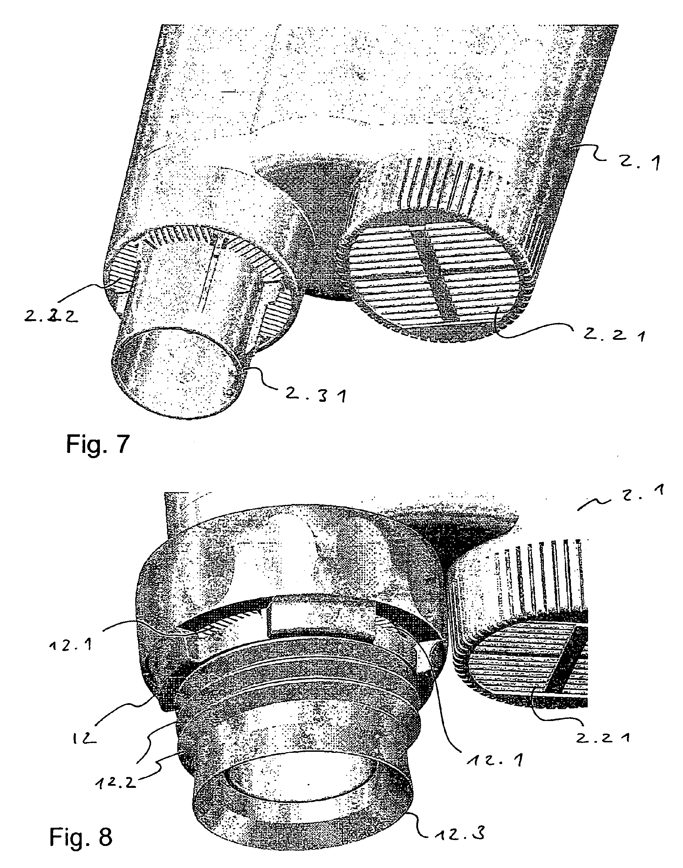

FIG. 7 shows the water inlet area and water outlet area of the filter cartridge 1 in a three dimensional view without the sealing at the connection nozzle 2.31.

FIG. 8 shows the water inlet and water outlet area of the filter cartridge 1 with a further embodiment of the sealing at the connection nozzle 2.31 in a three dimensional view. The sealing 12 comprises several inlet openings 12.1 which are arranged at the circumference of the connection nozzle 2.31. Furthermore, the sealing 12 comprises two radial sealing lips 12.2 and a axial sealing lip 12.3. The lips 12.3 can be used to cause a traction force between the connection nozzle 2.31 of the cartridge 1 and the tank nozzle 21.1 so that the cartridge 1 is safely fixed in the tank 20. The dimensions, and in particular the diameter of the sealing 12 of the water filter cartridge 1 is matched to the dimensions of the tank nozzle 21.1 of the water tank 20.

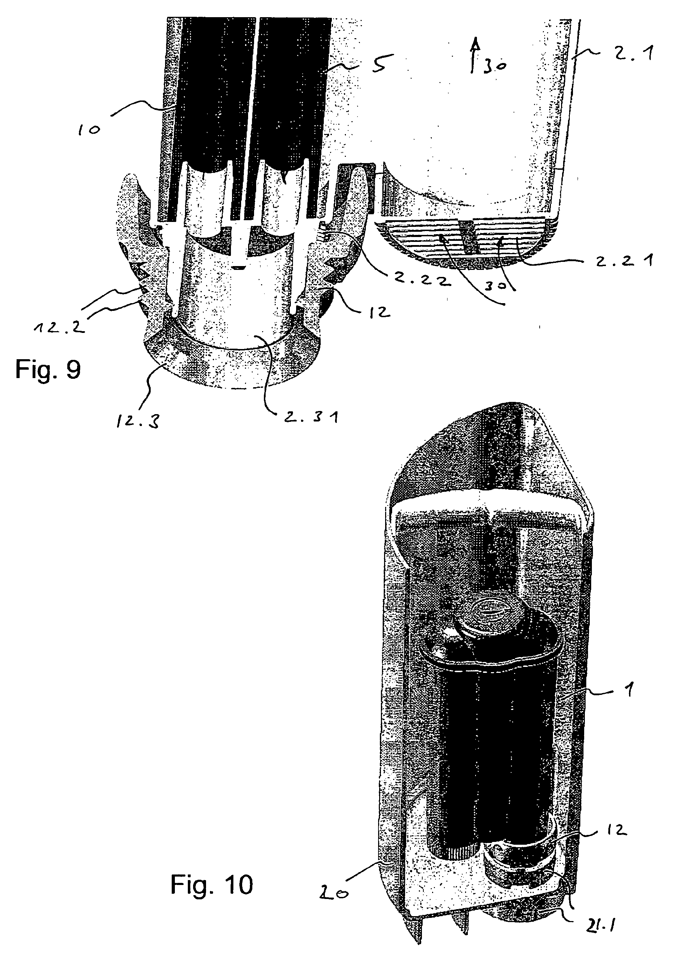

In FIG. 9 the water inlet and outlet area of the filter cartridge 1 with the sealing are shown in cross-section. As can be seen, the lower ends of the pipes 5 and 10 lead into the connection nozzle 2.31.

FIG. 10 shows in a three dimensional view an example of the water tank 20 with the filter cartridge 1.

At the tank bottom side of the tank outlet 21.2 a plunger (not shown in the figures) can be provided which is kept by means of a spring in a closed position, when the water tank 20 is removed from the beverage machine. At the upper end of the plunger a sealing is provided. When the water tank 20 is fixed on the beverage machine, the plunger is pressed upwards and the outlet 21.2 is opened.

In a further embodiment which is not shown in the figures, there are several outlet openings in the pipe 5. These outlet openings are arranged in the pipe 5 on top of each other and can be simple holes. Their diameter or opening width (if the pipe is not round) can be adapted to the quantity of water which should flow through the appropriate hole into the pipe 5.

The water can be sucked into the filter cartridge by means of a suction pump which is naturally part of the beverage machine but which is not shown in the figures.

The terms "upper outlet opening 6" and "lower outlet opening 7" should express that the outlet opening 6 bears in spatial relation to the outlet opening 7 but this does not mean that the outlet opening 6 is arranged spatially above the outlet opening 7 although this is depicted that way in the figures. The figures show only some embodiments of the invention. In fact, if the filter cartridge 1 is designed for example rather plain than high, this spatial relation between the upper and the lower outlet opening means that the upper outlet opening 6 is arranged with respect to the direction of the streaming of the water ahead of the lower outlet opening 7. The terms "lower" and "upper" express that there is a spatial distance between the two outlets 6 and 7 no matter of their spatial orientation or the orientation of the filter cartridge 1 in the water tank.

Having illustrated and described a preferred embodiment for a novel beverage machine with a water tank and a filter cartridge, it is noted that variations and modifications in the machine, the water tank and the filter cartridge can be made without departing from the scope of the appended claims. Particularly, the features of the different embodiments are interconvertible and can be combined.

### Reference signs

| | |
|---|---|
| 1 | filter cartridge |
| 2 | housing |
| 2.1 | sidewall |
| 2.21 | inlet |
| 2.22 | inlet |
| 2.31 | connection nozzle |
| 2.32 | outlet |
| 3 | cap |
| 4 | filter material |
| 5 | pipe or channel |
| 5.1 | vertical section |
| 5.2 | horizontal section |
| 5.3 | horizontal section |
| 6 | upper outlet opening |
| 6.1 | frame |
| 6.2 | sieve |
| 7 | lower outlet opening |
| 7.1 | frame |
| 7.2 | sieve |
| 8 | lower outlet opening |
| 8.2 | sieve |
| 9 | sealing |
| 10 | pipe |
| 11 | lower outlet opening |
| 11.1 | frame |
| 11.2 | sieve |
| 12 | sealing |
| 12.1 | inlet |
| 12.2 | radial sealing lip |
| 12.3 | axial sealing lip |
| 13 | disk |
| 20 | tank |
| 21.1 | tank outlet nozzle |
| 21.2 | tank outlet |
| 30 | flow direction |

## Claims

1. Filter cartridge for a beverage machine,
- wherein a housing (2) with an inlet (2.21) and an outlet (2.32) is provided,
- wherein filter material (4) is located in the housing (2),
- wherein a lower outlet opening (7; 8; 11) for a first part of filtered water is provided which is connected to the outlet (2.32), and
- wherein an upper outlet opening (6) for filtered water, which is more filtered than the first part of filtered water, is provided which is connected to the outlet (2.32).

2. Filter cartridge according to claim 1,
wherein the upper outlet opening (6) and the lower outlet opening (7; 8) are connected via a channel (5) to the outlet (2.32).

3. Filter cartridge according to claim 2,
- wherein the upper outlet opening (6) is located at an upper end of the channel (5), and
- wherein the lower outlet opening (8) is located in the channel (5) between the upper outlet opening (6) and the outlet (2.32).

4. Filter cartridge according to claim 1,
- wherein the upper outlet opening (6) is connected via a first channel (5) to the outlet (2.32),
- wherein the lower outlet opening (11) is connected via a second channel (10) to the outlet (2.32), and
- wherein the first channel (5) is longer than the second channel (10).

5. Filter cartridge according to one of the claims 1 to 4,
wherein the upper outlet opening (6) is equipped with a sieve (6.2).

6. Filter cartridge according to one of the claims 1 to 5,
wherein the lower outlet opening (7; 8; 11) is equipped with a further sieve (7.2; 8.2; 11.2).

7. Filter cartridge according to one of the claims 1 to 6,
wherein the upper outlet opening (6) is arranged within the housing (2.1) in the upper area.

8. Filter cartridge according to one of the claims 1 to 7,
wherein the lower outlet opening (7; 8; 11) is arranged within the housing (2.1) in the middle area.

9. Filter cartridge according to one of the claims 1 to 8,
wherein the housing (2.1) comprises a further inlet (2.22) in the lower area.

10. Filter cartridge according to one of the claims 1 to 9,
wherein a connection nozzle (2.31) with a sealing (9; 12) is provided.

11. Filter cartridge according to one of the claims 1 to 10,
wherein the channel (5; 10) is arranged in such a way in the housing (2) that the water flows in the channel (5; 10) downwards.

12. Beverage machine with a water tank and a filter cartridge according to one of the previous claims 1 to 11,
wherein the water tank (20) comprises a tank nozzle (21.1) forming a water outlet (21.2) and which is provided to be connected to the connection nozzle (2.31) of the filter cartridge (1).

13. Beverage machine according to Claim 12,
wherein the tank nozzle (21.1) is arranged in the floor of the water tank (20).

## Patentansprüche

1. Filterkartusche für eine Getränkemaschine,
- bei der ein Gehäuse (3) mit einem Einlass (2.21) und einem Auslass (2.32) vorgesehen ist,
- bei der sich in dem Gehäuse (2) Filtermaterial (4) befindet,
- bei der eine untere Auslassöffnung (7; 8; 11) für einen ersten Teil von gefiltertem Wasser vorgesehen ist, die mit dem Auslass (2.32) verbunden ist, und
- bei der eine obere Auslassöffnung (6) für gefiltertes Wasser, das stärker gefiltert ist als der erste Teil von gefiltertem Wasser, vorgesehen ist, die mit dem Auslass (2.32) verbunden ist.

2. Filterkartusche nach Anspruch 1,
bei der die obere Auslassöffnung (6) und die untere Auslassöffnung (7; 8) durch einen Kanal (5) mit dem Auslass (2.32) verbunden sind.

3. Filterkartusche nach Anspruch 2,
- bei der sich die obere Auslassöffnung (6) an einem oberen Ende des Kanals (5) befindet, und
- bei der sich die untere Auslassöffnung (8) zwischen der oberen Auslassöffnung (6) und dem Auslass (2.32) in dem Kanal (5) befindet.

4. Filterkartusche nach Anspruch 1,
- bei der die obere Auslassöffnung (6) über einen ersten Kanal (5) mit dem Auslass (2.32) verbunden ist,
- bei der die untere Auslassöffnung (11) über einen zweiten Kanal (10) mit dem Auslass (2.32) verbunden ist, und
- bei der der erste Kanal (5) länger als der zweite Kanal (10) ist.

5. Filterkartusche nach einem der Ansprüche 1 bis 4, bei der die obere Auslassöffnung (6) mit einem Sieb (6.2) ausgestattet ist.

6. Filterkartusche nach einem der Ansprüche 1 bis 5, bei der die untere Auslassöffnung (7; 8; 11) mit einem weiteren Sieb (7.2; 8.2; 11.2) ausgestattet ist.

7. Filterkartusche nach einem der Ansprüche 1 bis 6, bei der die obere Auslassöffnung (6) im oberen Bereich in dem Gehäuse (2.1) angeordnet ist.

8. Filterkartusche nach einem der Ansprüche 1 bis 7, bei der die untere Auslassöffnung (7; 8; 11) im mittleren Bereich in dem Gehäuse (2.1) angeordnet ist.

9. Filterkartusche nach einem der Ansprüche 1 bis 8, bei der das Gehäuse (2.1) einen weiteren Einlass (2.22) im unteren Bereich aufweist.

10. Filterkartusche nach einem der Ansprüche 1 bis 9,
bei der ein Verbindungsstutzen (2.31) mit einer Dichtung (9; 12) vorgesehen ist.

11. Filterkartusche nach einem der Ansprüche 1 bis 10,
bei der der Kanal (5; 10) so in dem Gehäuse (2) angeordnet ist, dass das Wasser in dem Kanal (5; 10) abwärts fließt.

12. Getränkemaschine mit einem Wassertank und einer Filterkartusche nach einem der vorhergehenden Ansprüche 1 bis 11,
bei der der Wassertank (20) einen Tankstutzen (21.1) aufweist, der einen Wasserauslass (21.2) bildet und zur Verbindung mit dem Verbindungsstutzen (2.31) der Filterkartusche (1) vorgesehen ist.

13. Getränkemaschine nach Anspruch 12,
bei der der Tankstutzen (21.1) im Boden des Wassertanks (20) angeordnet ist.

## Revendications

1. Cartouche filtrante pour une machine à boisson,
- dans laquelle est fourni un boîtier (2) avec une entrée (2.21) et une sortie (2.32),
- dans laquelle un matériau filtrant (4) est disposé dans le boîtier (2),
- dans laquelle il est prévu une ouverture de sortie inférieure (7, 8, 11) reliée à la sortie (2.32), pour une première quantité d'eau filtrée, et
- dans laquelle il est prévu une ouverture de sortie supérieure (6) reliée à la sortie (2.32), pour de l'eau filtrée davantage filtrée que la première quantité d'eau filtrée.

2. Cartouche filtrante selon la revendication 1, dans laquelle l'ouverture de sortie supérieure (6) et l'ouverture de sortie inférieure (7, 8) sont reliées la sortie (2.32) par un canal (5).

3. Cartouche filtrante selon la revendication 2,
- dans laquelle l'ouverture de sortie supérieure (6) est située à une extrémité supérieure du canal (5), et
- dans laquelle l'ouverture de sortie inférieure (8) est située dans le canal (5), entre l'ouverture de sortie supérieure (6) et la sortie (2.32).

4. Cartouche filtrante selon la revendication 1,
- dans laquelle l'ouverture de sortie supérieure (6) est reliée à la sortie (2.32) par un premier canal (5),
- dans laquelle l'ouverture de sortie inférieure (11) est reliée à la sortie (2.32) par un deuxième canal (10), et
- dans laquelle le premier canal (5) est plus long que le deuxième canal (10).

5. Cartouche filtrante selon l'une des revendications 1 à 4,
dans laquelle l'ouverture de sortie supérieure (6) est équipée d'un tamis (6.2).

6. Cartouche filtrante selon l'une des revendications 1 à 5,
dans laquelle l'ouverture de sortie inférieure (7 ; 8 ; 11) est équipée d'un tamis supplémentaire (7.2 ; 8.2 ; 11.2).

7. Cartouche filtrante selon l'une des revendications 1 à 6,
dans laquelle l'ouverture de sortie supérieure (6) est prévue dans la zone supérieure à l'intérieur du boîtier (2.1).

8. Cartouche filtrante selon l'une des revendications 1 à 7,
dans laquelle l'ouverture de sortie inférieure (7 ; 8 ; 11) est prévue dans la zone du milieu à l'intérieur du boîtier (2.1).

9. Cartouche filtrante selon l'une des revendications 1 à 8,
dans laquelle le boîtier (2.1) comprend une entrée supplémentaire (2.22) dans la zone inférieure.

10. Cartouche filtrante selon l'une des revendications 1 à 9,
dans laquelle il est prévu une tubulure (2.31) avec un joint (9 ; 12).

11. Cartouche filtrante selon l'une des revendications 1 à 10,
dans laquelle le canal (5 ; 10) est agencé de telle manière dans le boîtier (2), que l'eau s'écoule vers le bas dans le canal (5 ; 10).

12. Machine à boissons avec un réservoir d'eau et une cartouche filtrante selon l'une des revendications précédentes 1 à 11,
dans laquelle le réservoir d'eau (20) comprend une tubulure de réservoir (21.1) formant une sortie d'eau (21.2) et destinée à être reliée à la tubulure (2.31) de la cartouche filtrante (1).

13. Machine à boissons selon la revendication 12, dans laquelle la tubulure de réservoir (21.1) est agencée dans le fond du réservoir d'eau (20).
